# EUROPEAN PATENT SPECIFICATION

(11) **EP 2 554 357 B1**
(45) Date of publication and mention of the grant of the patent: **09.04.2014**
(21) Application number: 12179162.8
(22) Date of filing: 03.08.2012
(51) Int. Cl.: B29C 49/48, B29C 33/30

(54) **Blow moulding machine with mould clamping and method therefore**
Blasformmaschine mit Formhalteeinrichtung und entsprechendes Verfahren
Dispositif de formage par soufflage avec dispositif de serrage du moule et un procédé

(30) Priority: 05.08.2011 IT PR20110073
(43) Date of publication of application: 06.02.2013
(73) Proprietor: Gea Procomac S.p.A., 43038 Sala Baganza (PR) (IT)
(72) Inventor: Dordoni, Claudio, 43126 Parma (IT); Troadec, Bernard, 44210 Pornic (FR)
(74) Representative: Monelli, Alberto

(56) References cited:
- EP-A1- 2 202 047
- WO-A1-2011/026803
- WO-A1-2011/026828
- DE-A1-102009 050 637

## Description

The present invention refers to a half-portion for moulding a container from a parison in plastic material, a mould and a method for changing a mould. In particular, the present invention finds application in the bottling field, for example, in machines for moulding containers for stretch blow moulding.

As is well known, a mould is comprised of two half-moulds, mobile with respect to one another, which are fastened to corresponding supports assembled on the blowing machine. In this context, the half-mould and its support constitute a half-portion of the mould. There are different types of moulds, classified according to the opening principle. "Linear" moulds are formed by half-moulds, relatively mobile through translation. "Alligator mouth" (or more briefly "alligator") moulds and "book" moulds comprise two half-moulds hinged to each other at one of the two ends. In alligator moulds, the half-moulds are hinged along a substantially horizontal axis of rotation, whereas in book moulds the hinge axis is substantially vertical.

A system commonly used for fastening each half-mould to the corresponding support consists of providing a first set of nail-shaped protruding elements fastened internally with screws to the support for striking on the half-mould, and a second set of removable protruding elements that block the half-mould from the opposite part, that is, the part accessible to the operator. The elements of the second set, when moved away from the half-mould, allow the latter to be released and replaced.

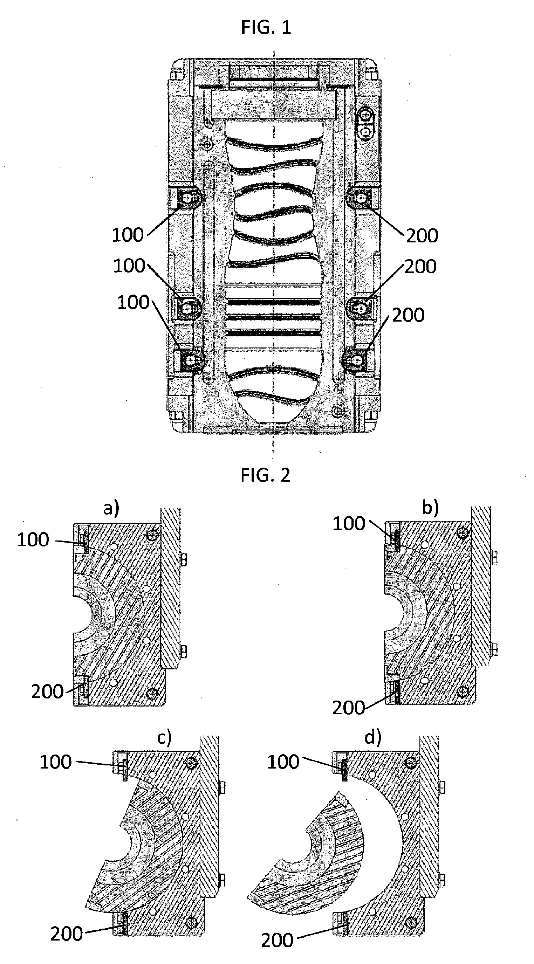

This solution is illustrated in Figure 1, wherein the number 100 is used to indicate the protruding elements of the first set and the number 200 to indicate the protruding elements of the second set.

The half-portion of Figure 1 belongs to a book mould, therefore the first set of protruding elements can be found from the axis of rotation and the second set of protruding elements can be found on the outer side.

A similar solution can also be used for an alligator mould, wherein the first set and the second set are located to the left and to the right of the mould respectively.

With this solution, the mould change cycle envisages the following steps:
- With production shut-down and machine in manual mode, the mould is taken into a pre-defined position accessible to the operator (Figure 2a);
- The mould is opened;
- For each protruding element of the second set, the corresponding fastening screw is unscrewed;

- The protruding elements of the second set are moved away from the half-mould (Figure 2b);
- The half-mould is rotated within its seat so as to release it from striking against the protruding elements of the first set (Figure 2c);
- The half-mould is removed from the support (Figure 2d);
- A new half-mould is introduced into the support and rotated it until it strikes on the protruding elements of the first set;
- The protruding elements of the second set are moved towards the half-mould and the corresponding fastening screws are screwed.

Changing the mould also envisages changing the bottom, that is, the shaping element of the base of the container, which is arranged so as to be engaged (or disengaged) from the half-moulds during the closing (or opening) movement.

The main disadvantage of the solution just illustrated lies in the high time consumption due to the unscrewing and screwing of the screws of the removable protruding elements and their movement away from and towards one another. For example, considering a blowing machine with 32 moulds and considering three removable protruding elements for each half-mould, in total 192 screws need to be screwed and unscrewed and 192 protruding elements need to be moved away from and towards one another for every format change operation. Since nowadays the bottling field requires remarkably flexible systems, with mould change operations to be performed various times a day, it is obvious that the solution described above involves machine downtimes that are no longer acceptable.

Another solution, known by the commercial name "Speed-loc", has been drawn up by KHS Corpoplast and envisages a set of blocking elements of the half-mould interconnected with each another by means of a rod internal to the support. The release of the half-mould takes place with the aid of a key which, when inserted in a relevant hole in the support, strikes against the interconnection rod of the blocking elements, causing upwards translation.

Also the Sidel Group, as part of the quick format change system known to the operators in the field as the "Bottle switch", has developed a fastening system of the half-moulds to the supports based on protruding elements connected to each another by a rod internal to the support. The protruding elements are made to reverse laterally using a key or lever, which allows the half-mould to be released and replaced.

The last two solutions mentioned, although reducing the mould change time, involve mechanical complexity with sliding parts subject to possible wear and, however, incompatible with controlled contamination environments subject to periodic sterilisations. These solutions are also conditioned, in their embodiment, by the fact that the mould is externally encumbered by clamping lever mechanisms.

Another similar solution with an internal rod was developed by KRONES in DE102009050637, in particular in the thirteenth embodiment of figures 14a-14d.

It should be pointed out that the Applicant has recently developed a clamping system of the mould using rings or collars placed in correspondence with opposite bases of the mould (European patent no. 2202048).

In this context, the technical task at the basis of the present invention is to offer a half-portion for moulding a container from a parison in plastic material, a mould and a method for changing a mould, which overcome the disadvantages of the known art quoted above.

In particular, the present invention proposes a half-portion for moulding a container from a parison in plastic material and a mould, which can be quickly and easily changed in the event of format change, also for use in controlled contamination environments.

Another aim of the present invention is to provide a quicker method for changing a mould than the known methods, so as to reduce machine downtime.

The technical task and aims specified are substantially reached by a half-portion for moulding a container from a parison in plastic material, a mould and a method for changing a mould, comprising the technical characteristics set out in one or more of the accompanying claims.

Further characteristics and advantages of the present invention will be clear from the indicative, and therefore non-limiting, description of a preferred but non exclusive embodiment of a half-portion for moulding a container from a parison in plastic material, a mould and a method for changing a mould, as illustrated in the attached drawings, in which:
- Figure 1 illustrates a moulding half-portion according to the known art;
- Figures 2a-2d illustrate as many steps of a mould change cycle formed by two half-portions of Figure 1 (known art);
- Figure 3 illustrates a half-portion for moulding a container from a parison in plastic material, according to the present invention, in sectional view, with the bracket in blocking configuration and the lever in operative position;
- Figure 4 illustrates the half-portion of Figure 3, in a view from above;
- Figure 5 illustrates the half-portion of Figure 3, in a lateral view;
- Figure 6 illustrates a mould in closed position, according to the present invention, in a prospect view;
- Figure 7 illustrates the mould of Figure 6, in an open position;
- Figure 8 illustrates the half-portion of Figure 3, in a lateral view, with the lever in resting position;
- Figure 9 illustrates the half-portion of Figure 3, in a lateral view, with the bracket in an unblocking configuration;
- Figure 10 illustrates the half-portion of Figure 9, in a view from above;
- Figures 11 and 12 illustrate the semi-portion of Figure 3, in a view from above, in two subsequent steps of rotation and removal of the half-mould from the support.

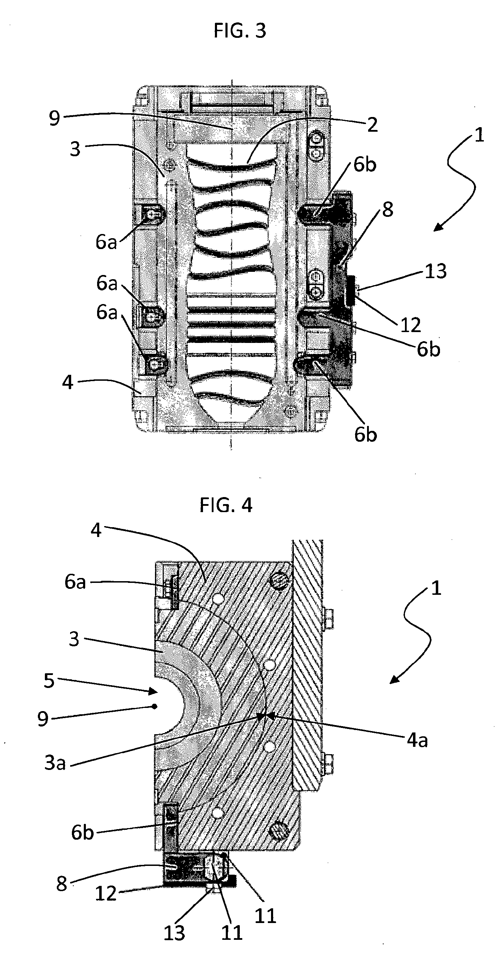

With reference to Figures 3-12, number 1 indicates a half-portion for moulding a container 2 from a parison in plastic material. The moulding half-portion 1 comprises a half-mould 3 and a support 4 operatively active on the half-mould 3 for supporting it. In particular, the half-mould 3 is shaped in such a way as to define at least a half-cavity 5 for housing the parison. The support 4 has an inner surface 4a counter-shaped relative to an outer surface 3a of the half-mould 3 in such a way as to partially surround the latter.

The half-mould 3 is fastened to the support 4 through fastening means comprising a first set of protruding elements 6a fixed, for example through screws, in corresponding seats of the support 4 for striking on the half-mould 3 and a second set of protruding elements 6b removably insertable in through-cavities 7 obtained in the support 4 in such a way as to strike on the half-mould 3 for blocking it.

Originally, the fastening means comprise a bracket 8 being placed external to the support 4 and from where the second set of protruding elements 6b branches off. The bracket 8 is rotatable between a blocking configuration in which said protruding elements 6b of the second set are inserted inside the through-cavities 7, and an unblocking configuration in which said protruding elements 6b are extracted from the through-cavities 7 in such a way as to allow removing the half-mould 3.

Number 9 is used to indicate the axis of the half-portion 1, coinciding with the axis of symmetry of the parison or the moulded container 2 placed in the housing half-cavity 5.

The bracket 8 develops substantially parallel to the axis 9 of the half-portion 1, whereas the protruding elements 6b of the second set branch off the bracket 8 forming angles of 90° circa. The through-cavities 7 develop transversally to the axis 9 of the half-portion 1 so as to be able to house such protruding elements 6b.

In the embodiment described and illustrated herein, the first set comprises three protruding elements 6a and the second set comprises three protruding elements 6b. Preferably, as illustrated in Figures 3-12, the half-mould 3 has a substantially half-cylindrical shape and the support 4 has a recess, also half-cylindrical. In that case, the outer surface 3a of the half-mould 3 corresponds to the outer lateral surface of a cylinder, whereas the inner surface 4a of the support 4 corresponds to the surface of the half-cylindrical recess.

Outside the support 4 a frame 11 is placed to which the bracket 8 is hinged. The frame 11 extends substantially parallel to the bracket 8.

A clamping element 12 is also envisaged, operatively active on the bracket 8 for blocking it in the blocking configuration, preventing its rotation relative to the frame 11.

In the embodiment described and illustrated herein, the clamping element 12 consists of a lever screwed to the frame 11 and configurable between an operative position in which it strikes on the bracket 8 for blocking it in the blocking configuration, and a resting position in which the lever 12 is moved away from the bracket 8 for allowing the rotation and the transition to the unblocking configuration.

Preferably, the lever 12 is fastened to the frame 11 through a single fastening screw 13.

In an alternative embodiment (not illustrated), the clamping element 12 consists of an articulated lever fast-locking tool.

Number 10 indicates a mould comprising two moulding half-portions 1 like the one just described.

In particular, the two half-portions 1 are relatively mobile with respect to one another between a closed position of the mould 10 in which they are moved close to each other to define at least one cavity for housing the parison or the moulded container 2, and an open position of the mould 10 in which they are moved away from each other to enable the disengagement of the moulded container 2.

The housing cavity of the mould 10 is made by moving the half-cavities 5 of the two half-portions 1 close to each other.

The mould 10 is also provided with two locking collars 14 operatively active on opposite bases 10a, 10b of the mould 10 for blocking it in the closed position. Preferably, the mould 10 is provided with a bottom 15 cooperating with the half-portions 1 to shape the base of the container 2. In particular, the bottom 15 is positioned in correspondence with one of the bases 10a, 10b of the mould 10.

The method to change a mould, according to the present invention, is described below.

With production shut-down and machine in manual mode, the mould 10 is taken into a pre-defined position accessible to the operator.

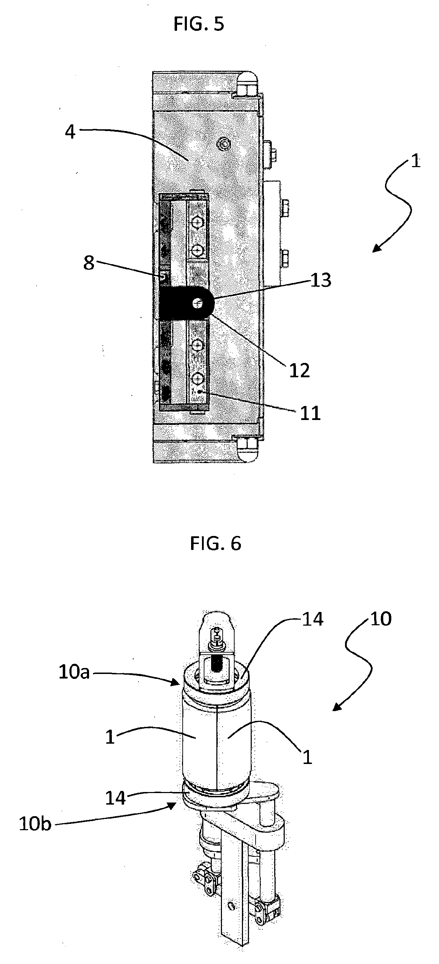

Initially, for each moulding half-portion 1, the bracket 8 is placed in the blocking position and the lever 12 is in the operative position in which it strikes on the bracket 8 for keeping it blocked, as illustrated in Figure 5.

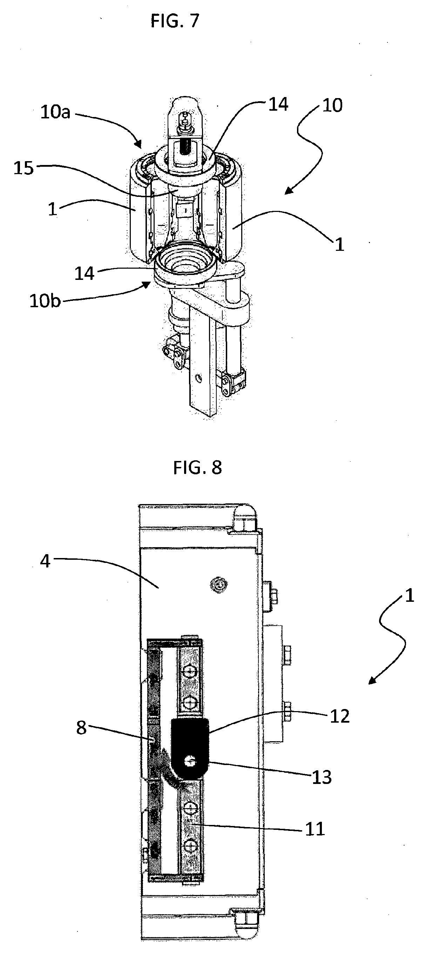

The mould 10 is then opened making the moulding half-portions 1 move away from each other. For example, in the embodiment described and illustrated herein, the mould 10 is a book mould, therefore the opening takes place by making the half-portions 1 rotate around a vertical hinging axis (see Figures 6 and 7).

At this point, for each half-portion 1 the following operations are performed.

The fastening screw 13 of the lever 12 is unscrewed so that the lever 12 can perform a rotation of 90° circa around the axis of the screw 13 and is brought into the resting position (see Figure 8).

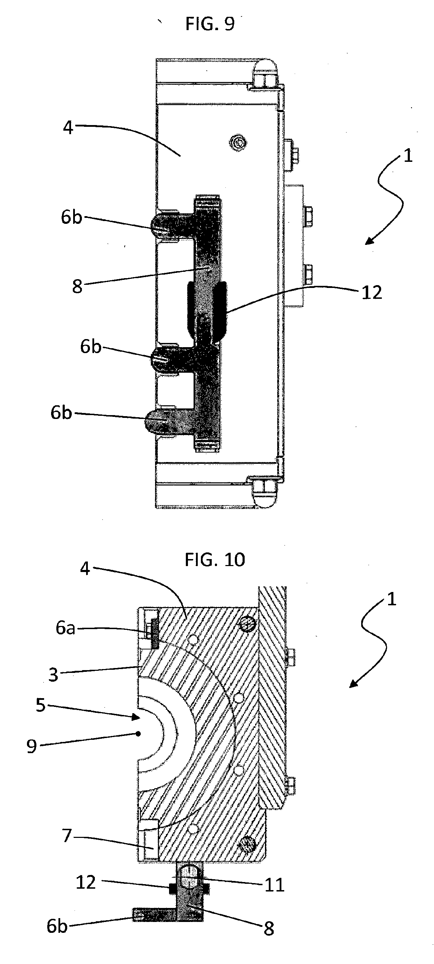

At this point, the bracket 8 is made to rotate around the frame 11 until it is taken into the unblocking configuration wherein the protruding elements 6b of the second set are removed from the through-cavities 7, as shown in Figures 9 and 10.

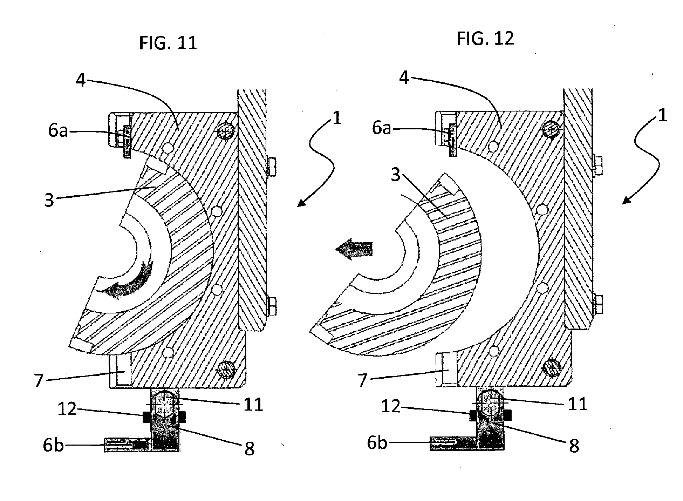

The half-portion 3 is made to rotate relative to the support 4 so as to be released from the first set of protruding elements 6a, as shown in Figure 11. The half-mould 3 can now be removed from the support 4 (see Figure 12) and replaced by a new half-mould 3.

The new half-mould 3 is made to rotate relative to the support 4 so as to strike against the first set of protruding elements 6a. The bracket 8 is then made to rotate around the frame 11 so that the protruding elements 6b of the second set enter into the through-cavities 7. Once the blocking configuration is reached, the bracket 8 is stopped through the lever 12, which is rotated through 90° so that it strikes on the bracket 8. The clamping force of the bracket 8 on the half-mould 3 is guaranteed by the action of the lever 12 due to the screwing of the fastening screw 13.

The operator then proceeds also to replace the bottom 15.

From the description given, the characteristics of the moulding half-portion, the mould and the method for changing a mould, according to the present invention, are clear, as are the advantages thereof.

In particular, thanks to the fact that the fastening of the half-mould to the support takes place through a bracket external to the support, the operator can access the half-portion more quickly and easily to release it and replace it.

The operation is simple since it only requires a rotation of the bracket, which takes place simply by acting on the outside of the bracket, without needing to provide grooves or access holes internal to the support.

The outer positioning of the bracket is made possible by the fact that blocking the mould takes place through the two collars placed on the opposite bases of the mould and not through lever mechanisms lateral to the mould.

The fact that to release the bracket it is sufficient to unscrew a single screw, that is, the one that keeps the lever hinged to the frame of the bracket, contributes to the speed.

## Claims

1. Half-portion (1) for moulding a container (2) from a parison (3) in plastic material, comprising:
a half-mould (3) shaped in such a way as to define at least a half-cavity (5) for housing the parison;
a support (4) operatively active on the half-mould (3) for supporting it, said support (4) having an inner surface (4a) counter-shaped relative to an outer surface (3a) of the half-mould (3) in such a way as to partially surround the latter;
means for fastening the half-mould (3) to the support (4), said fastening means comprising a first set of protruding elements (6a) fixed in corresponding seats of the support (4) for striking on the half-mould (3) and a second set of protruding elements (6b) removably insertable in through-cavities (7) obtained in the support (4) in such a way as to strike on the half-mould (3) for blocking it,
wherein said fastening means further comprise a bracket (8) from which the second set of protruding elements (6b) branch off, said bracket (8) being placed external to the support (4) and being rotatable between a blocking configuration in which the protruding elements (6b) of the second set are inserted inside the through-cavities (7), and an unblocking configuration in which said protruding elements (6b) of the second set are extracted from the through-cavities (7) in such a way as to allow removing the half-mould (3), wherein said fastening means further comprise a frame (11) situated external to the support (4), said bracket (8) being hinged to said frame (11), and
wherein said fastening means further comprise a clamping element (12) operatively active on the bracket (8) for blocking it in the blocking configuration, preventing it from rotating relative to the frame (11), **characterized in that** said clamping element (12) consists in a lever screwed to said frame (11) and configurable between an operative position in which it strikes on the bracket (8) for blocking it in the blocking configuration, and a resting position in which the lever (12) is moved away from the bracket (8) for allowing the rotation of thereof..

2. Moulding half-portion (1) according to claim 1, wherein said protruding elements (6b) of the second set branch off the bracket (8) forming angles of 90° circa with respect to the bracket (8), said bracket (8) developing substantially parallel to an axis (9) of the half-portion (1) which coincides with the axis of symmetry of the parison or of the moulded container (2) placed in said housing half-cavity (5).

3. Mould (10) for moulding a container (2) from a parison in plastic material, comprising:
two moulding half-portions (1) according to claims 1 to 2, said half-portions (1) being relatively mobile with respect to one another between a closed position of the mould (10) in which they are moved close to each other to define a cavity for housing the parison or the moulded container (2), and an open position of the mould (10) in which they are moved away from each other to enable the disengagement of the moulded container (2);
two locking collars (14) operatively active on opposite bases (10a, 10b) of the mould (10) for blocking it in the closed position.

4. Method for changing a mould (10) according to claim 3, **characterised in that** it comprises the steps of:
moving the moulding half-portions (1) of the mould (10) away from each other;
disengaging the clamping element (12) from the bracket (8)
for each half-portion (1), rotating the bracket (8) in such a way that the protruding elements (6b) of the second set are removed from the through-cavities (7);
for each half-portion (1), removing the half-mould (3) from the support (4);
for each half-portion (1), inserting a new half-mould (3) inside the support (4);
for each half-portion (1), rotating the bracket (8) in such a way that the protruding elements (6b) enter into the through-cavities (7).

## Patentansprüche

1. Halbteil (1) zum Formen eines Behälters (2) aus einem Vorformling (3) aus Kunststoffmaterial, umfassend:
eine Formhälfte (3), die so ausgestaltet ist, dass sie mindestens einen Halbhohlraum (5) zur Aufnahme des Vorformlings definiert;
eine Halterung (4), die betriebswirksam auf der Formhälfte (3) aktiv ist, um diese zu halten, wobei die Halterung (4) eine innere Oberfläche (4a) aufweist, die zu einer äußeren Oberfläche (3a) der Formhälfte (3) gegenständig ausgestaltet ist, sodass sie Letztere teilweise umgibt;
Mittel zum Befestigen der Formhälfte (3) an der Halterung (4), wobei diese Befestigungsmittel eine erste Reihe an vorspringenden Elementen (6a) umfassen, die in entsprechenden Sitzen der Halterung (4) fixiert sind, um an die Formhälfte (3) anzuschlagen, und eine zweite Reihe an vorspringenden Elementen (6b), die entfernbar in Durchführungshohlräume (7) eingesetzt werden können, ausgebildet in der Halterung (4), sodass an die Formhälfte (3) angeschlagen wird, um diese festzuspannen,
wobei die Befestigungsmittel zudem einen Bügel (8) umfassen, aus dem die zweite Reihe vorspringender Elemente (6b) abzweigt, wobei der Bügel (8) außerhalb der Halterung (4) angeordnet ist und zwischen einer Festspannkonfiguration, in der die vorspringenden Elemente (6b) der zweiten Reihe in die Durchführungshohlräume (7) eingesetzt sind, und
einer Freigabekonfiguration drehbar ist, in der diese vorspringenden Elemente (6b) der zweiten Reihe aus den Durchführungshohlräumen (7) so herausgezogen werden, dass die Formhälfte (3) entfernt werden kann,
wobei diese Befestigungsmittel zudem einen Rahmen (11) umfassen, der außerhalb der Halterung (4) angeordnet ist, wobei der Bügel (8) an diesem Rahmen (11) angelenkt ist und
wobei diese Befestigungsmittel zudem ein Klemmelement (12) umfassen,
das betriebswirksam auf dem Bügel (8) aktiv ist, um ihn in der Festspannkonfiguration festzuspannen und zu vermeiden, dass er sich zum Rahmen (11) dreht,
**dadurch gekennzeichnet, dass** dieses Klemmelement (12) aus einem Hebel besteht, der am Rahmen (11) angeschraubt ist und zwischen einer Betriebsstellung, in der er an den Bügel (8) anschlägt, um diesen in der Festspannkonfiguration festzuspannen, und einer Ruhestellung, in der der Hebel (12) vom Bügel entfernt wird, um dessen Drehung zu erlauben, konfigurierbar ist.

2. Formhalbteil (1) nach Anspruch 1, wobei die vorspringenden Elemente (6b) der zweiten Reihe vom Bügel (8) abzweigen und Winkel von zirka 90° zum Bügel (8) bilden, und der Bügel (8) sich im Wesentlichen parallel zu einer Achse (9) des Halbteils (1) entwickelt, die mit der Symmetrieachse des Vorformlings oder des geformten Behälters (2), eingesetzt in den Aufnahmehalbhohlraum (5), übereinstimmt.

3. Form (10) zum Formen eines Behälters (2) aus einem Vorformling aus Kunststoffmaterial, umfassend:
zwei Formhalbteile (1) nach Anspruch 1 bis 2, wobei diese Halbteile (1) relativ zueinander beweglich sind, und zwar zwischen einer geschlossenen Stellung der Form (10), in der sie einander angenähert werden, um einen Hohlraum zur Aufnahme des Vorformlings oder des geformten Behälters (2) zu bilden, und einer offenen Stellung der Form (10), in der sie voneinander entfernt werden, um das Herauslösen des geformten Behälters (2) zu ermöglichen;
zwei Verriegelungsschellen (14), die betriebswirksam an entgegengesetzten Basen (10a, 10b) der Form (10) aktiv sind, um sie in der geschlossenen Stellung festzuspannen.

4. Verfahren zum Wechseln einer Form (10) nach Anspruch 3, **dadurch gekennzeichnet, dass** es folgende Schritte umfasst:
Bewegen der Formhalbteile (1) der Form (10), um diese voneinander zu entfernen;
Lösen des Klemmelements (12) aus dem Bügel (8);
für jedes Halbteil (1) Drehen des Bügels (8), sodass die vorspringenden Elemente (6b) der zweiten Reihe aus den Durchführungshohlräumen (7) entfernt werden;
für jedes Halbteil (1) Entfernen der Formhälfte (3) aus der Halterung (4);
für jedes Halbteil (1) Einsetzen einer neuen Formhälfte (3) in die Halterung (4);
für jedes Halbteil (1) Drehen des Bügels (8), sodass die vorspringenden Elemente (6b) in die Durchführungshohlräume (7) eingesetzt werden.

## Revendications

1. Demi-portion (1) servant à mouler un récipient (2) à partir d'une paraison (3) en matière plastique, comprenant :
un demi-moule (3) d'une forme telle à définir au moins une demi-cavité (5) servant à loger la paraison ;
un support (4) fonctionnellement actif sur le demi-moule (3) pour le supporter, ledit support (4) ayant une surface interne (4a) présentant une forme complémentaire par rapport à une surface externe (3a) du demi-moule (3) de manière à partiellement entourer ce dernier ;
des moyens servant à fixer le demi-moule (3) au support (4), lesdits moyens de fixation comprenant un premier ensemble d'éléments en saillie (6a) fixés dans des sièges correspondants du support (4) pour se placer sur le demi-moule (3) et un second ensemble d'éléments en saillie (6b) pouvant s'insérer de façon amovible dans des cavités débouchantes (7) obtenues dans le support (4) de manière à se placer sur le demi-moule (3) pour le bloquer,
dans laquelle lesdits moyens de fixation comprennent de plus un étrier (8),
de lequel le second ensemble d'éléments en saillie (6b) bifurque, ledit étrier (8) étant placé à l'extérieur du support (4) et pouvant tourner entre une configuration de blocage, dans laquelle les éléments en saillie (6b) du second ensemble sont insérés à l'intérieur des cavités débouchantes (7),
et une configuration de déblocage, dans laquelle lesdits éléments en saillie (6b) du second ensemble sont extraits des cavités débouchantes (7) de manière à permettre le retrait du demi-moule (3),
dans laquelle lesdits éléments de fixation comprennent de plus un châssis (11) situé à l'extérieur du support (4), ledit étrier (8) étant monté pivotant au dit châssis (11), et
dans laquelle lesdits moyens de fixation comprennent de plus un élément de serrage (12) fonctionnellement actif sur l'étrier (8) pour le bloquer dans la configuration de blocage, l'empêchant de tourner par rapport au châssis (11),
**caractérisée en ce que** ledit élément de serrage (12) consiste en un levier vissé au dit châssis (11) et pouvant être configuré entre une position fonctionnelle, dans laquelle il vient se placer sur l'étrier (8) pour le bloquer dans la configuration de blocage, et une position de repos, dans laquelle le levier (12) est éloigné de l'étrier (8) pour permettre la rotation de cet dernier.

2. Demi-portion de moulage (1) selon la revendication 1, dans laquelle lesdits éléments en saillie (6b) du second ensemble bifurquent de l'étrier (8) en formant des angles d'environ 90° par rapport à l'étrier (8), ledit étrier (8) se développant substantiellement de façon parallèle par rapport à un axe (9) de la demi-portion (1) qui coïncide avec l'axe de symétrie de la paraison ou du récipient moulé (2) placé dans ladite demi-cavité de logement (5).

3. Moule (10) servant à mouler un récipient (2) à partir d'une paraison en matière plastique, comprenant :
deux demi-portions de moulage (1) selon les revendications 1 à 2, lesdites demi-portions (1) étant relativement mobiles l'une par rapport à l'autre entre une position de fermeture du moule (10), dans laquelle elles sont rapprochées l'une de l'autre pour définir une cavité servant à loger la paraison ou le récipient moulé (2), et une position d'ouverture du moule (10), dans laquelle elles sont éloignées l'une de l'autre pour permettre le dégagement du récipient moulé (2) ;
deux colliers de verrouillage (14) fonctionnellement actifs sur des bases opposées (10a, 10b) du moule (10) pour le bloquer dans la position de fermeture.

4. Procédé permettant de modifier un moule (10) selon la revendication 3, **caractérisé en ce qu'**il comprend les étapes de :
éloigner l'une de l'autre les demi-portions de moulage (1) du moule (10) ;
désengager l'élément de serrage (12) de l'étrier (8) ;
pour chaque demi-portion (1), tourner l'étrier (8) de manière à ce que les éléments en saillie (6b) du second ensemble soit retirés des cavités débouchantes (7) ;
pour chaque demi-portion (1), retirer le demi-moule (3) du support (4) ;
pour chaque demi-portion (1), insérer un nouveau demi-moule (3) à l'intérieur du support (4) ;
pour chaque demi-portion (1), tourner l'étrier (8) de manière à ce que les éléments en saillie (6b) entrent dans les cavités débouchantes (7).
